# EUROPÄISCHE PATENTANMELDUNG

(11) **EP 3 093 184 A1**
(43) Veröffentlichungstag der Anmeldung: **16.11.2016**
(21) Anmeldenummer: 16175548.3
(22) Anmeldetag: 04.05.2012
(51) Int. Cl.: B60L 11/18

(54) **VERFAHREN ZUR ERFASSUNG EINES VON EINER ERSTEN EINHEIT ZU EINER ZWEITEN EINHEIT TRANSFERIERBAREN, MENGENMÄSSIG BESTIMMBAREN MEDIUMS**

(30) Priorität: 04.05.2011 EP 11164800; 19.09.2011 EP 11181806
(62) Teilanmeldung aus: 12721458.3
(71) Anmelder: Burchard, Bernd, 45276 Essen (DE); Montino, Ralf, 44143 Dortmund (DE)
(72) Erfinder: Burchard, Bernd, 45276 Essen (DE); Montino, Ralf, 44143 Dortmund (DE); Wollinger, Thomas, 44801 Bochum (DE); Küster, Matthias, 44801 Bochum (DE)
(74) Vertreter: dompatent von Kreisler Selting Werner - Partnerschaft von Patent- und Rechtsanwälten mbB

(57) **Zusammenfassung**

Verfahren zur Erfassung eines von einer ersten Einheit zu einer zweiten Einheit transferierbaren, mengenmäßig bestimmbaren Mediums, mit den folgenden Schritten
- kontinuierliches Erfassen der von der ersten Einheit an die zweite Einheit transferierten Menge an Medium,
- kontinuierliches Erfassen der Menge an Medium, die die zweite Einheit von der ersten Einheit empfangen hat,
- kontinuierliches Vergleichen beider erfasster Mengen und
- Bewerten des aktuellen Ergebnisses des Vergleichs.

Dieses Verfahren kann bidirektional arbeiten.

## Beschreibung

Diese Patentanmeldung nimmt die Prioritäten der europäischen Patentanmeldungen 11 164 800.2 vom 4. Mai 2011 und 11 181 806.8 vom 19. September 2011 in Anspruch, deren Inhalte hiermit durch Bezugnahme zum Gegenstand der vorliegenden Patentanmeldung gemacht werden.

Die Erfindung betrifft ein Verfahren zur Erfassung von von einer ersten Einheit zu einer zweiten Einheit transferierbaren, mengenmäßig bestimmbaren elektrischen Stroms, z.B. zur Erfassung kommerzieller Stromlieferdaten für den Betrieb z.B. eines elektrogetriebenen Fahrzeuges oder eines (insbesondere mobilen) elektrisch betriebenen Geräts.

Aus WO-A-2010/074644 ist ein Verfahren zur Erfassung eines von einer ersten Einheit zu einer zweiten Einheit transferierbaren, mengenmäßig bestimmbaren Mediums, nämlich elektrische Energie, z.B. zur Erfassung kommerzieller Stromlieferdaten für den Betrieb beispielsweise eines elektrogetriebenen Fahrzeuges oder eines (insbesondere mobilen) anderen elektrisch betriebenen Geräts bekannt. Bei diesem bekannten Verfahren wird sowohl energielieferseitig als auch energieempfängerseitig die transferierte Energiemenge erfasst. Sollten die beiden Werte um mehr als ein vorgebbarer Mindestwert voneinander abweichen, wird der Transfervorgang abgebrochen.

Weitere Verfahren und System zum Transferieren elektrischer Energie für Fahrzeuge und zur Abrechnung der transferierten Energiemengen insbesondere mittels drahtloser Kommunikation sind aus EP-A-2 199 143, WO-A-2010/149449, DE-A-10 2009 030 093 und DE-U-20 2008 014 766 bekannt.

Durch die knapper werdenden Ölvorkommen der Erde, die durch den Ausstoß von CO₂ vorhergesagte Klimaproblematik und verschiedene andere Faktoren ist ein Umstieg auf elektrogetriebene Fahrzeuge in Zukunft wahrscheinlich.

Hierbei kann von einem Szenario ausgegangen werden, in dem wiederaufladbare Energiespeicher in den Fahrzeugen eine wesentliche Rolle spielen werden.
1. Ein Problem hierbei ist die Verfügbarkeit eines geeigneten Tankstellennetzes.
2. Ein weiteres Problem ist die korrekte Erfassung und Abrechnung der erbrachten Leistungen.
3. Dieses ist vermischt mit der Notwendigkeit, den Stromkunden, den Kfz-Halter, den Besitzer der Stromquelle, bei der es sich typischerweise um eine Steckdose handelt, den Eigentümer der Stromquelle (typischerweise aber nicht notwendig der Stromnetzbetreiber), den Stomnetzbetreiber, den Stromlieferanten und die Institution, die den Vertragsabschluss verifiziert, separieren und zumindest einen der Partner authentifizieren zu können, um ein Maximum an Flexibilität und Wettbewerb zu ermöglichen.
4. Des Weiteren ist das System vor Manipulationen zu schützen.
5. Außerdem sollte das System sicherheitskritische Fehler entdecken können.

Die Erfindung stellt sich die Aufgabe, einen Transfervorgang der zuvor genannten Art sicher zu gestalten. Dabei sollten die zuvor genannten fünf Anforderungen erfüllt sein. Wesentlicher Kernpunkt hierfür sind bestimmte Eigenschaften, die das Fahrzeug erfüllen sollte.

Zur Lösung dieser Aufgabe wird mit der Erfindung ein Verfahren zur Erfassung eines von einer ersten Einheit zu einer zweiten Einheit transferierbaren, mengenmäßig bestimmbaren Mediums, nämlich elektrischer Strom, mit den Schritten des Anspruchs 1 vorgeschlagen, wobei die Reihenfolge der Schritte nicht zwingend ist. Einzelne Ausgestaltungen der Erfindung sind Gegenstand der Unteransprüche.

Mit dem erfindungsgemäßen Verfahren wird eine weitreichende Flexibilität für die Kunden des Mediums (nämlich Strom), das transfertiert werden soll, geschaffen. Auf das Beispiel einer Ladestation für elektrische Energie als die erste Einheit und eines Elektrofahrzeuges als zweite Einheit bezogen bedeutet dies, dass der Bezahlvorgang nicht mehr fahrzeuggebunden ist sondern dass der Bezahlvorgang die Identifizierung/Autorisierung einer natürlichen oder juristischen Person gegenüber dem Stromlieferanten erfordert. Die Person identifiziert sich gegenüber dem Stromlieferanten als Vertragskunde oder aber als eine Person, die, beispielsweise auf Grund einer Vorauszahlung (Prepaid-Card) beim Stromlieferanten oder einer mit diesem in Verbindung stehenden Institution über ein Guthaben verfügt. Vor dem eigentlichen Transfervorgang des Mediums erfolgt eine Auswahl des Mediumlieferanten, und zwar am Ort der ersten Einheit durch dort vorhandene Endgeräte wie beispielsweise Terminals, oder durch entfernt vom Ort der ersten Einheit (beispielsweise in der zweiten Einheit) angeordnete feste oder mobile Endgeräte. Die die transferierte Mediummenge bezahlende Entität (natürliche oder juristische Person) kann frei über den Lieferanten entscheiden und ist beispielsweise insoweit nicht an irgendwelche Verträge o.dgl. Bindungen zwischen dem Ladestationsbetreiber, Netzbetreiber oder Lieferanten gebunden. Auch spielt für die Bezahlung die zweite Einheit (beispielsweise das Fahrzeug) keine Rolle.

In vorteilhafter Weiterbildung der Erfindung kann vorgesehen sein, dass die erste Einheit ein Medium-Erzeuger und/oder ein Medium-Lieferant und/oder ein Medium-Übertrager ist oder mit mindestens einem dieser in Verbindung steht bzw. zu mindestens einem dieser gehört und dass die zweite Einheit eine die Menge an Medium verarbeitende Entität (z.B. natürlich oder juristische Person) ist oder dass die zweite Einheit ein Medium-Erzeuger und/oder ein Medium-Lieferant und/oder ein Medium-Übertrager ist oder mit mindestens einem dieser in Verbindung steht bzw. zu mindestens einem dieser gehört und dass die erste Einheit eine die Menge an Medium verarbeitende oder eine gespeicherte Menge an Medium zur Verfügung stellende Entität (z.B. natürlich oder juristische Person) ist. Der klassische Fall ist der, dass das Medium vom Erzeuger oder Lieferanten kommt und dass die zweite Einheit ein Kunde ist. Hier ist insbesondere der Fall des Stromanbieters und des Kunden (Elektrofahrzeug oder natürliche bzw. juristische Person) zu nennen. Es kann aber auch umgekehrt so sein, dass der Erzeuger bzw. Lieferant vom Kunden Medium, das er zuvor an diesen geliefert hat, zurücktransferiert wissen möchte. Dies gilt beispielsweise dann, wenn ein Elektrofahrzeug am Netz angeschlossen ist und der Stromanbieter oder Netzbetreiber zur Zwischenspeicherung von elektrischer Energie Speicherkapazitäten benötigt. Auch für diese Fälle des Transfers von Medium von der ersten an die zweite Einheit und umgekehrt gilt die erfindungsgemäß vorgesehene Identifikation und Autorisation seitens einer außerhalb der beiden Einheiten stehenden Entität (natürliche oder juristische Person).

Die Erfindung lässt sich zweckmäßigerweise mit dem Abgleich der gelieferten Menge des Mediums mit der Menge an empfangenem Medium kombinieren. Dies bedeutet, dass beide Einheiten, nämlich die den Strom lieferende Einheit und die den Strom empfangende Einheit jeweils über eine Mess- und Erfassungsvorrichtung verfügt. In Abhängigkeit vom aktuellen Ergebnis des kontinuierlich durchgeführten Vergleichs können dann verschiedene Aktionen in Gang gesetzt werden. Beispielsweise kann der Transfervorgang abgebrochen werden oder aber es kann eine Fehlermeldung ausgegeben werden, woraufhin dann eine entsprechende Fehlersuche durchgeführt werden kann (beispielsweise Überprüfung von Kontakten o.dgl. elektrischen Verbindungen auf Funktionstüchtigkeit).

Man könnte ferner beispielsweise kleinste Abweichungen der erfassten empfangenen Menge an Medium gegenüber den jeweils gelieferten Mengen an Medium erfassen können. Wenn der Ladevorgang für den Erfassungszeitraum stets von derselben ersten Einheit oder die ersten Einheiten ein und desselben Betreibers aus (zu ein und derselben oder verschiedenen zweiten Einheiten) erfolgt ist, könnte man kleinste Abweichungen über die Ladevorgänge akkumulieren, bis gegebenenfalls ein Mindestwert überschritten ist, der dann zum Abbruch des gerade durchgeführten Ladevorgangs führen könnte. Ein solches Szenario mit Akkumulation von kleinsten Abweichungen pro Ladevorgang könnte auch zwischen mehreren ersten Einheiten, die örtlich verteilt sind, oder mehreren Gruppen von jeweils pro Gruppe gleichen und von Gruppe zu Gruppe unterschiedlichen Unternehmen betriebenen ersten Einheiten und einer zweiten Einheit ablaufen. Die Akkumulation potentieller kleinster Abweichungen kann also zwischen jeder von mehreren ersten Einheiten und jeder von mehreren zweiten Einheiten oder aber mehreren Gruppen von zweiten Einheiten erfolgen. Der zuletzt genannte Fall kann interessant für ein Fahrzeugflottenmanagement sein, bei dem die Fahrzeuge von einem mehrere erste Einheiten betreibenden Unternehmen elektrische Energie beziehen.

Zweckmäßigerweise werden die Mess- bzw. Erfassungseinheiten regelmäßig überprüft und abgeglichen (für die Erfindung ist es jedoch nicht erforderlich, dass einer der beiden Einheiten z. B. geeicht ist). Nachdem also von geeichten Mess- und Erfassungseinheiten nicht ausgegangen zu werden braucht, hat die beidseitige Messung neben dem unzweifelhaft notwendigen Nutzen der Sicherheit noch den entscheidenden Vorteil, dass die beiden Einheiten bzw. ihre Verantwortlichen sich über die Menge an übertragenem gelieferten Medium einigen und schon deshalb im Nachhinein kein Streit über die gelieferte Menge aufkommen kann. Zudem ist damit ein Betrieb vollkommen ohne "regulatorische Infrastruktur" möglich. Anders ausgedrückt, ist es also nicht notwendig, dass sich beispielsweise innerhalb der EU die beteiligten Staaten auf einen Eichstandard oder Ähnliches festlegen müssen.

Es kann vorgesehen sein, dass der Transfer des Mediums von der ersten Einheit auf die zweite Einheit abgebrochen wird, sobald während des Transfervorgangs sich die erfassten Mengen um mehr als ein vorgebbarer Differenzwert voneinander unterscheiden. Vor dem Abbruch des Transfervorgangs kann zweckmäßigerweise noch eine Warnung o.dgl. Information betreffend den beabsichtigten Abbruch des Transfers an die zweite Einheit bzw. eine für die zweite Einheit verantwortliche Entität (z.B. Besitzer bzw. Eigentümer bzw. Fahrer eines Elektrofahrzeugs) abgesetzt wird. Es kann aber auch vorgesehen sein, dass die das Medium empfangende Einheit oder deren verantwortliche Entität den Vorgang trotz einer detektierten, gemeldeten Abweichung weiterlaufen lässt und dies ggf. entsprechend auch bestätigt.

Vorzugsweise ist vorgesehen, dass die erste Einheit stationär und die zweite Einheit mobil ist und dass die zweite Einheit ein elektrisch aufladbares Fahrzeug oder eine von einer Person mitführbare, elektrisch zu betreibende und insbesondere auch elektrisch aufladbare Gerätschaft wie beispielsweise ein Computer, ein Telefon oder ein anderes mobiles Endgerät ist.

Es kann ferner vorgesehen sein, dass sowohl die erste Einheit als auch die zweite Einheit jeweils eine insbesondere gewartete und abgeglichene Mess- und Erfassungsvorrichtung für die gelieferte bzw. empfangene Menge an Medium aufweist.

Bezogen auf den Anwendungsfall "Elektrofahrzeug" kann die Ausprägung der Erfindung beispielsweise wie folgt sein:
1. Fahrzeug mit einem Energiespeicher für elektrische Energie und einer Ladeeinheit sowie eine Messeinrichtung für elektrische Ladeenergie, wobei der Ladevorgang des elektrischen Energiespeichers durch ein verschlüsseltes Signal über eine verschlüsselte Datenleitung von einem externen Rechner mittels eines codierten Befehles oder einer codierten Befehlssequenz gestartet oder gestoppt oder gesteuert werden kann und wobei ein Prozess, der zum Starten des Ladevorgangs führt zu einem grundsätzlich beliebigen Zeitpunkt des Prozesses eine personalisierte Autorisierung - insbesondere PIN Eingabe - an einem insbesondere durch eine SIM Karte personalisiertem Mobilteil erfordert und wobei diese Identifikation für die Durchführung des zum Ladevorgang gehörenden Stromliefervertrages verwendet wird.
2. Fahrzeug mit einem Energiespeicher für elektrische Energie und einer Ladeeinheit sowie eine Messeinrichtung für elektrische Ladeenergie, wobei die durch die Messeinrichtung erfassten Messwerte während des Ladevorgangs mit den Messwerten einer ähnlichen Einrichtung der Stromentnahmestelle verglichen werden können und dass der Steuerrechner des Fahrzeugs für den Ladevorgang diesen Vergleich vornehmen kann.

Die Erfindung wurde vorstehend erläutert, und zwar anhand der Lieferung von elektrischem Strom von einer ersten Einheit zu einer zweiten Einheit. Dabei ist zu beachten, dass nach der Erfindung es nicht notwendigerweise immer so sein muss, dass stets die erste Einheit Strom an die zweite Einheit liefert und die zweite Einheit Strom von der ersten Einheit empfängt. Vielmehr wird mit der Erfindung auch der Fall abgedeckt, dass situationsbedingt die zweite Einheit Strom an die erste Einheit liefert und diese erste Einheit demzufolge Strom von der zweiten Einheit empfängt. Die Funktionen der ersten und zweiten Einheiten können also vertauscht sein bzw. wechseln. Somit wäre es also möglich, auch einen Vorgang zu überwachen, bei dem die mit dem Stromnetz (entweder durch mechanische Verbindung oder induktiv) gekoppelte zweite Einheit, an die zuvor Strom geliefert worden ist, diesen wieder abgibt, und zwar z. B. wegen kurzzeitiger Spitzenlastanforderungen des Stromnetzes.

Beispiele einer Ausprägung der Erfindung in ihrer Anwendung beim Ladevorgang eines Fahrzeuges mit einem Elektroantrieb sind in der Zeichnung wiedergegeben. Dabei zeigt:
- Fig. 1: eine beispielhafte Konfiguration bei Nutzung eines normalen Hausanschlusses,
- Fig. 2: eine beispielhafte Konfiguration bei Nutzung einer Stromtankstelle,

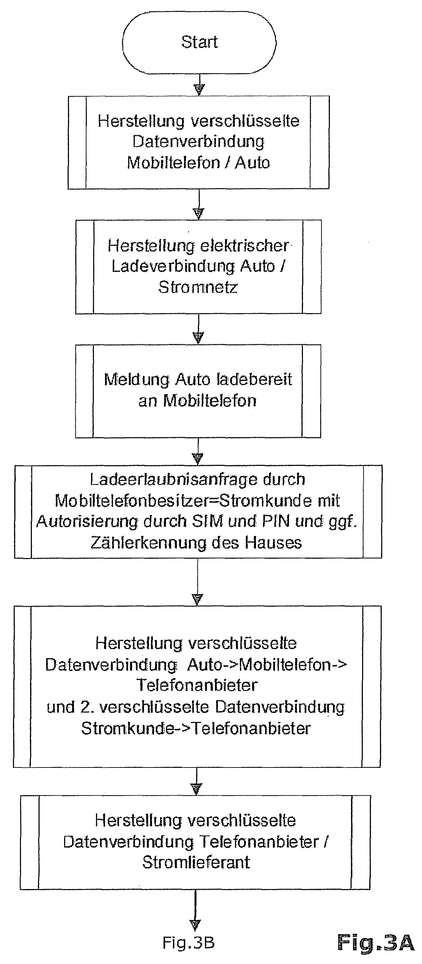

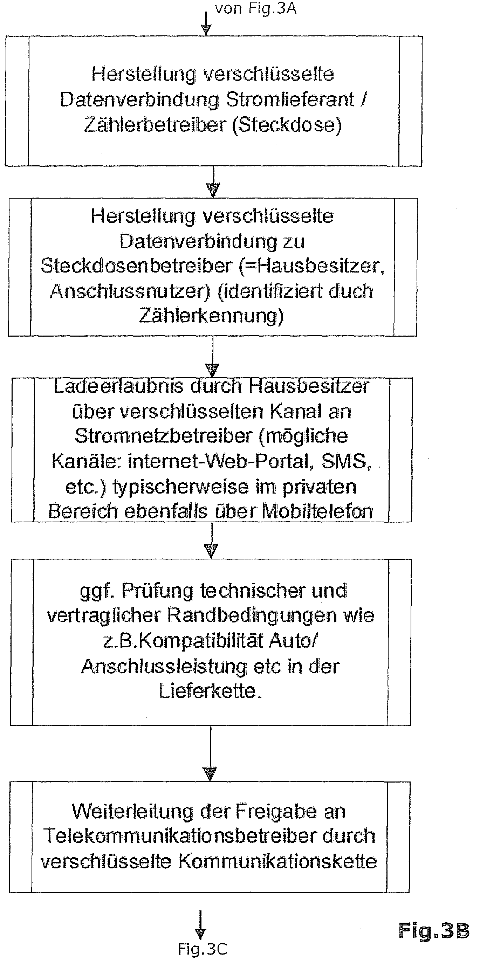

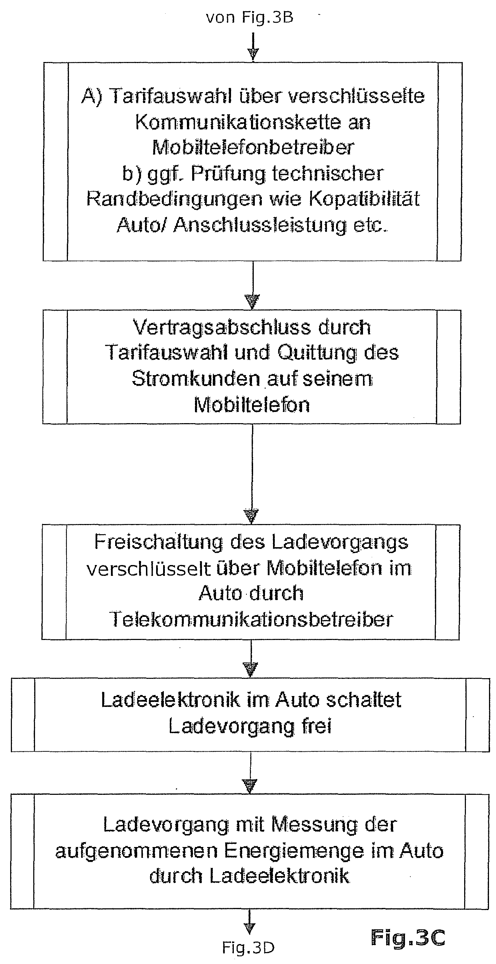

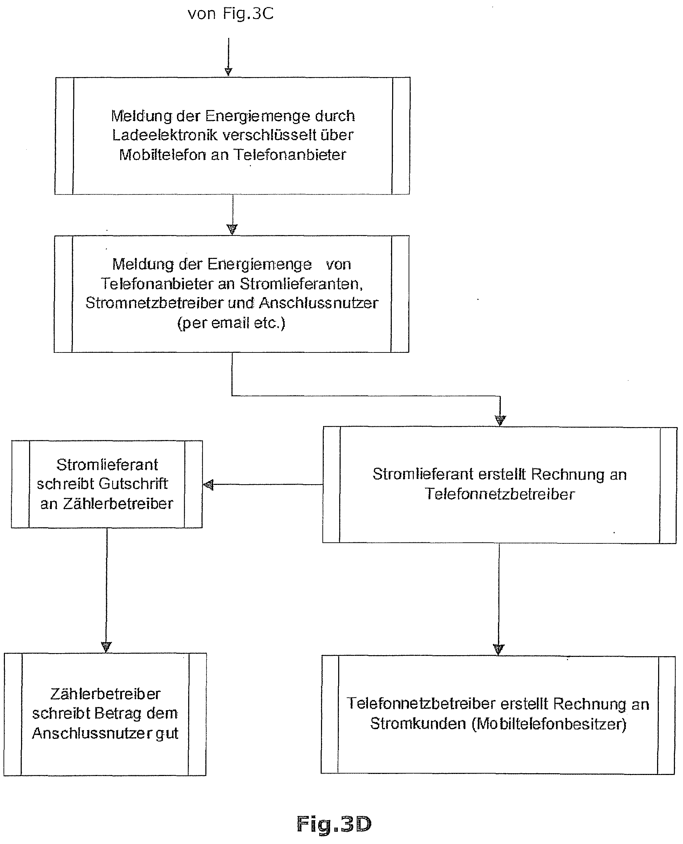

- Fign. 3A bis 3D: einen beispielhaften Ablauf bei einer normalen Entnahmestelle und

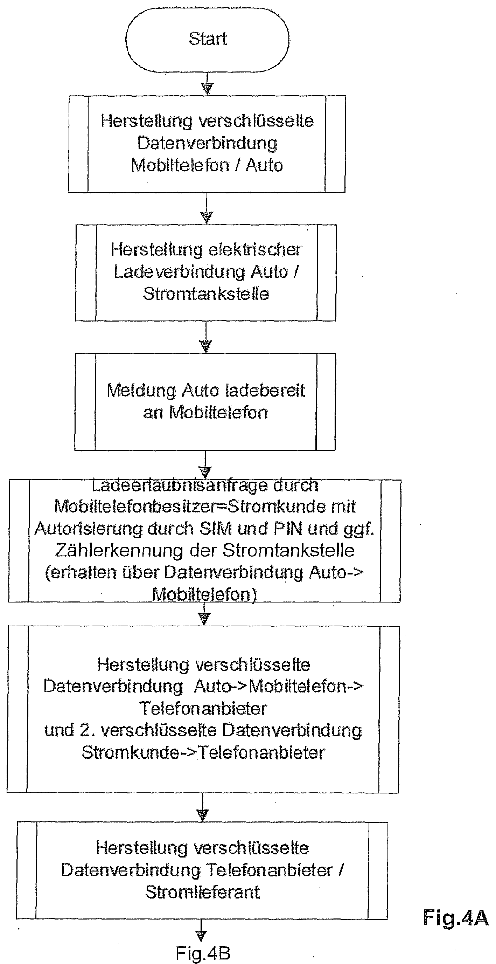

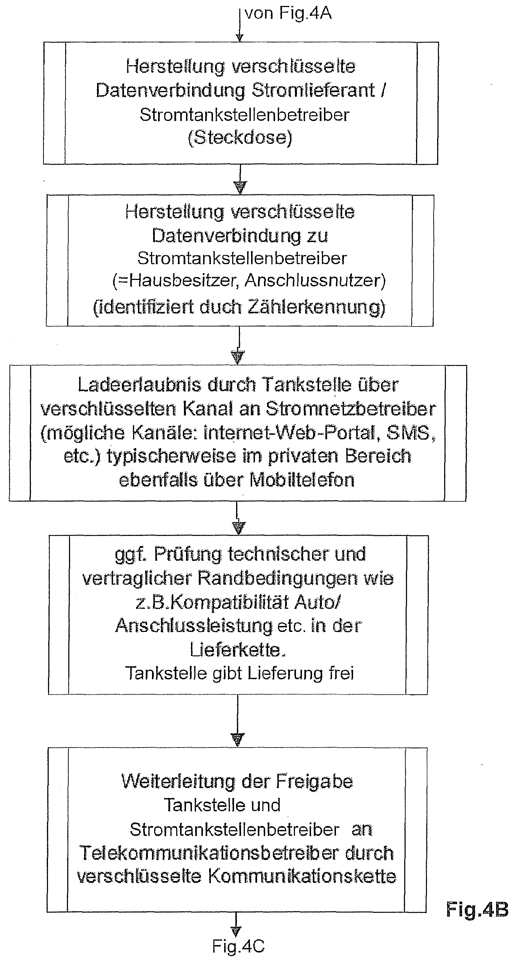

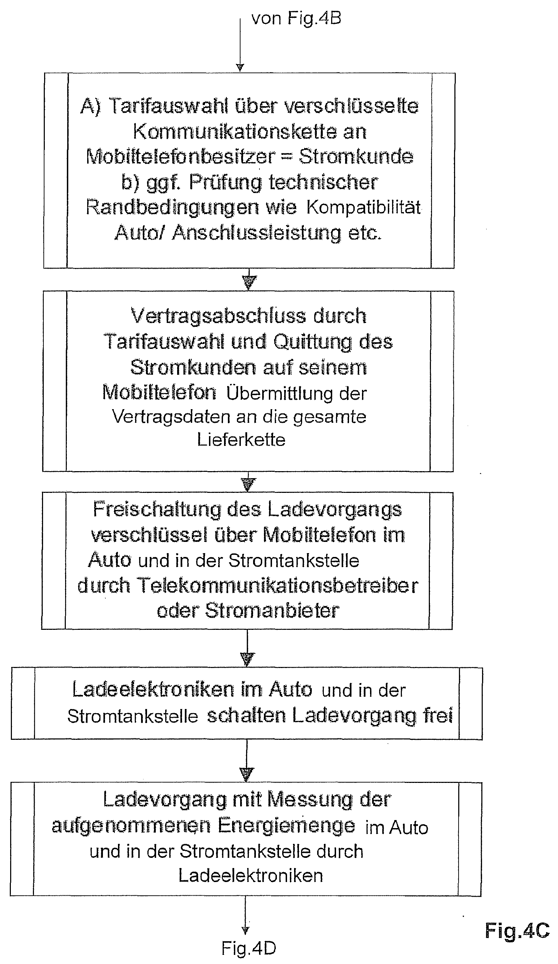

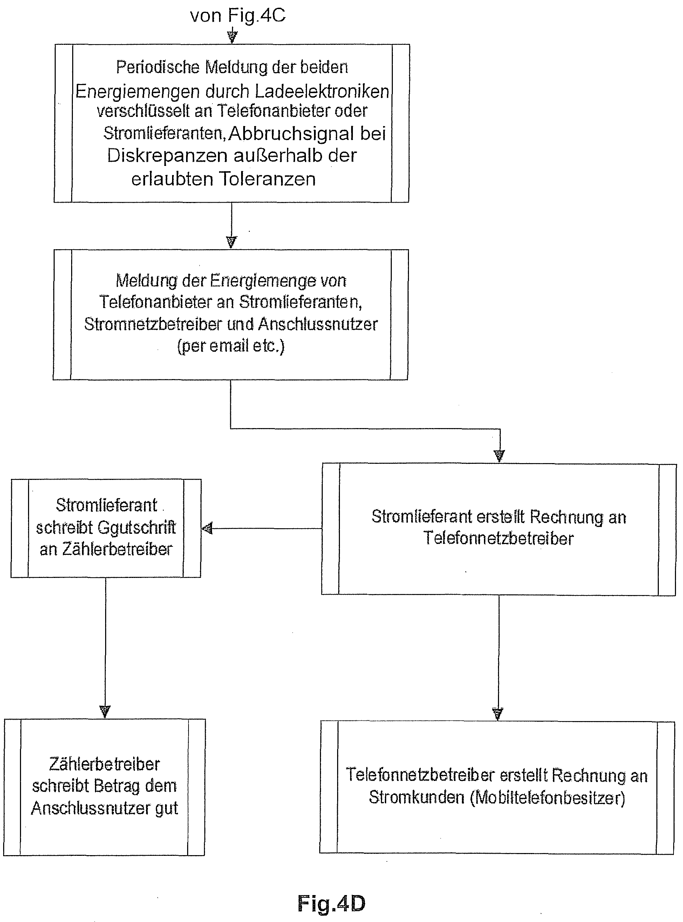

- Fign. 4A bis 4D: einen beispielhaften Ablauf bei einer Stromtankstelle.

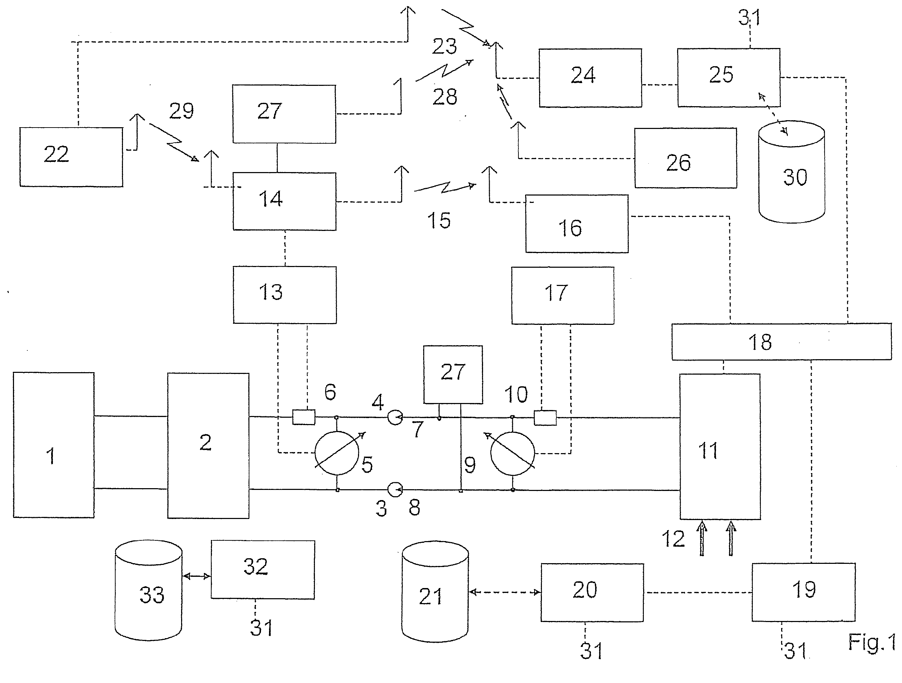

Die Erfindung wird in einer ersten Ausprägung anhand von Fig. 1 erläutert.

Der Stromkunde, der sein Auto mit elektrischer Energie betanken möchte, verfügt über ein Mobilteil 22 bzw. mobiles Terminal (z.B. mobiles Telefon), das über eine Einrichtung zur Identifikation des Verfügungsberechtigten (SIM= subscriber identification module) verfügt. Die Identifikation erfolgt durch das Mobilteil in der Art, dass der Stromkunde über ein Eingabemittel, z.B. die Tastatur, eine Schlüsselkombination (PIN) eingibt. Diese wird mit dem Schlüssel der SIM Karte verglichen. Hierdurch wird das Mobilteil in einen autorisierten Zustand versetzt.

Diese Personenidentifikation kann nun zur Organisation des Stromliefervertrages verwendet werden.

Hierfür muss eine logische Verbindung zwischen dieser Identifikationsinformation und der Aufschaltung elektrischer Energie auf ein Ladesteuergerät im Auto 2 und damit auf die Energiespeichereinheit 1 im Auto hergestellt und abgesichert werden.

Diese Verknüpfung ist ein erstes wesentliches Merkmal der Erfindung.

Um den Ladevorgang initiieren zu können, wird zunächst eine verschlüsselte Verbindung zwischen dem Mobilteil und dem Auto hergestellt. Dies kann auf physikalischer Ebene beispielsweise durch eine Bluetooth-Verbindung 29 geschehen, die zusätzlich verschlüsselt ist.

Sobald die logische Verbindung zwischen Mobilteil 22 und dem Steuerrechner 14 im Auto hergestellt ist und das Auto eine Verbindung detektiert hat, kann das Auto über ein eigenes Display oder über eine Anzeige auf dem Mobilteil 22 die Bereitschaft zur Initiierung des Ladevorgangs anzeigen. Dabei wäre es besonders vorteilhaft, wenn auch die Entnahmestelle intelligent ausgelegt ist. Dies ist aber keine zwingende Notwendigkeit.

In dem Fall einer intelligenten Entnahmestelle, kann der besagte Steuerrechner 14 des Autos über eine eigene erste Schnittstelle und die dazugehörige Datenverbindung 15 - typischerweise eine Funkverbindung - und eine Schnittstelle 16 der Entnahmestelle Kontakt mit einem Rechner 18 des Stromnetzanbieters und über diesen mit einem öffentlichen Kommunikationsnetz 31 aufnehmen. Der Rechner 18 kann in unmittelbarer Nähe der Entnahmestelle angeordnet sein, muss es aber nicht. Es kann sich dabei auch um einen Rechnerverbund handeln, bei dem sich ein Teil als Zentralrechner des Stomnetzbetreibers an einem ganz anderen Ort befindet.

Der Steuerrechner 14 des Autos stellt nun eine Verbindung zum Mobilteil 22 her und fragt über die Nutzerschnittstelle die Erlaubnis zur Vorbereitung des Ladevorgangs beim Mobilteilbesitzer an.

Der Stromkunde (Mobilteilbesitzer) quittiert dies. Ggf. wird erneut die in der SIM-Karte hinterlegte PIN abgefragt oder eine zweite unabhängige PIN. Diese erneute Identifikation ist jedoch eigentlich nicht mehr erforderlich, wenn sichergestellt ist, dass das Mobilteil ohne PIN-Autorisierung nicht betrieben werden kann und wenn angenommen und vertraglich gefordert wird, dass der Mobilteil nach erfolgter Autorisierung stets unter Aufsicht ist. Die Identifikationseinheit kann auch fest im Fahrzeug eingebaut sein. Je nach Bedarf ist dann eine zusätzliche Identifikation des Nutzers notwendig oder -beispielsweise im Flottenbetrieb- auch nicht.

Nach dieser Quittierung über die geschützte Datenverbindung 29 stellt das Auto eine verschlüsselte Datenverbindung zum Zentralrechner 25 des einer ersten Autorisierungsstelle - typischerweise des Telekommunikationsanbieters bzw. -(netz-)betreibers - über das Mobilteil oder eine andere zur Verfügung stehende verschlüsselte Datenleitung her. Dies ist notwendig, da die Authentifizierung durch die Vertragspartner des Stromkunden verifiziert werden muss. Diese verschlüsselte Verbindung wird am einfachsten über die Kette
Steuerrechner im Auto 14 - Datenverbindung Auto / Mobilteil 29 - Mobilteil 29 - Datenverbindung Mobilteil / Basisstation 23 - Basisstation 24 - Zentralrechner des Telekommunikationsanbieters 25
hergestellt.

Der Zentralrechner des Telekommunikationsanbieters und das Mobilteil überprüfen mit Hilfe mindestens einer Zufallsbotschaft (, die mittels vordefinierter, mobilteilspezifischer Schlüssel gesichert werden und vom Telekommunikationsanbieter an das Mobilteil und von diesem nach Dekodierung und Rücksendung wieder zurückgesendet werden sowie dem umgekehrten Vorgang, bei dem das Mobilteil eine Zufallsnachricht verschlüsselt, an den Telekommunikationsanbieter sendet und dieser diese entschlüsselt, neu verschlüsselt und wieder zurücksendet), ob der jeweilige Partner ein zugelassener Partner ist. Hierdurch wird der Telekommunikationsanbieter gegenüber dem Mobilteilbesitzer autorisiert.

Nun übermittelt der Steuerrechner 14 des Autos ein vordefiniertes verschlüsseltes Startsignal, das nur für den richtigen, d.h. autorisierten Telekommunikationsanbieter lesbar ist.

Der Telekommunikationsanbieter nutzt die hergestellte verschlüsselte Verbindung zum Mobilteil und quittiert den Beginn der Vertragsvereinbarungsprozedur. Typischerweise dürfte dem Mobilteilbesitzer die Gelegenheit gegeben werden, die Prozedur geeignet abzubrechen. Durch diese abgesicherte Quittung wird ein versehentlicher Vertragsabschluss vermieden.

Der Zentralrechner 25 des Telekommunikationsanbieters stellt nun eine verschlüsselte Verbindung zum Zentralrechner 20 mindestens eines Stromanbieters her. Typischerweise dürfte dies ein durch den Mobilteilbesitzer vorselektierter Stromlieferant sein. Es ist aber auch denkbar, mehrere Stromlieferanten zu kontaktieren. Dabei können diese Anforderungserfordernisse des Fahrzeugs übermittelt werden. Sofern mehrere Stromlieferanten zur Auswahl stehen, kann der Telefonnetzbetreiber eine Liste potenzieller Lieferanten und Tarife mit prognostizierten Kosten an das Mobilteil zur Entscheidung durch den Mobilteilbesitzer zurücksenden. Sofern dieser sich entschieden hat oder eindeutig ist, welcher Stromlieferant zu wählen ist, stellt der Zentralrechner des Stromlieferanten 20 über einen verschlüsselten Kommunikationskanal - beispielsweise über das öffentliche Telekommunikationsnetz 31 - einen Kontakt zum Zentralrechner des Stromnetzbetreibers 19 her. Ist dieser nicht eindeutig identifizierbar, so wird der Mobilteilbesitzer über die bereits bestehende verschlüsselte Kommunikationskette und sein Mobilteil um Identifikationsmerkmale (z.B. Zählernummer, Stromnetzbetreiber, Straße, Hausnummer, Name des Entnahmestellenbesitzers, ggf. Stromlieferant des Entnahmestellenbesitzers etc. am Mobilteil oder Fahrzeug) gebeten. Diese Kommunikation ist wie die gesamte in diesem Zusammenhang erfolgende Kommunikation wiederum verschlüsselt. Hierbei werden nicht alle Angaben erforderlich sein. Sinnvoll aber nicht notwendig ist hier eine preiswerte Bar-Code Markierung der Entnahmestelle, die beispielsweise über ein Lesegerät oder eine Kamera am Mobilteil 22 gelesen werden kann.

Nach Identifikation des Stromnetzanschlusses 12 informiert der Zentralrechner des Stromnetzbetreibers 19 den Besitzer des Stromnetzanschlusses 12. Dies geschieht wiederum über eine verschlüsselte Verbindung. In der Regel dürfte dieser Besitzer über einen Stromzähler 9,10 verfügen, mit dem beispielsweise sein Stromverbrauch gegenüber seinem Stromanbieter 20 abgerechnet wird.

Ein Problem ist, dass an dem Anschluss der Entnahmestelle 7,8 weitere Verbraucher 27, beispielsweise die Stromversorgung für ein Einfamilienhaus angeschlossen sein können. Die Steuerung des Stromes über eine separate Steuerung 11 scheidet daher in diesen Fällen des Vorhandenseins zusätzlicher Verbraucher 27 aus.

Daher wird zunächst davon ausgegangen, dass die Messwerte der entnahmestellenspezifischen Messeinrichtung 9,10,17 nicht für die unmittelbare Entnahme geeignet ist, da weitere Verbraucher 27 das Messergebnis verfälschen.

Nach der Information durch den Zentralrechner 19 des Stromnetzbetreibers erhält der Entnahmestellenbesitzer über eine geeignete Einrichtung - z.B. sein Mobiltelefon 26 - die Möglichkeit, die Stromentnahme zuzulassen. Die Stromentnahme über die elektrische Verbindung 3,4,7,8 wird zu diesem Zeitpunkt durch die Ladevorrichtung 2 im Auto verhindert.

Diese Zustimmung kann beispielsweise über ein Web-Portal, eine SMS oder per email oder eine sonstige Signalisierungseinrichtung über einen wiederum verschlüsselten Kommunikationskanal erfolgen. Die Ladezustimmung kann aber auch vertraglich vorab für bestimmte SIM-Karten von Besitzern des Mobilteils 22 vereinbart worden sein.

Bevor der Ladevorgang gestartet wird, können die Rechner 14,25,18,19,20 der Lieferkette noch technische Daten austauschen (z.B. Spannungen, Maximalströme, Inkompatibilitäten etc.). Sofern die endgültige Tarifauswahl noch nicht erfolgt ist, muss spätestens an dieser Stelle der Mobilteilbesitzer über sein Mobilteil 22 zur Tarifauswahl aufgefordert werden.

Schließlich tauschen die institutionellen Vertragspartner über verschlüsselte Kommunikationskanäle gegenseitig Zertifizierungsschlüssel, wie oben beispielhaft für Mobilteil und Telekommunikationsanbieter beschrieben, aus. Hierdurch wird sichergestellt, dass nur solche Stellen als Telekommunikationsanbieter, Stromanbieter etc. auftreten können, die tatsächlich dazu befugt sind. Erst hierdurch wird sichergestellt, dass nur eine zugelassene Autorisierungsstelle den Ladevorgang starten kann.

Sobald dieser technische und vertragliche Abgleich und die gegenseitige Autorisierung abgeschlossen ist und die Zustimmung aller Vertragspartner der Lieferkette vorliegt, autorisiert einer der Vertragspartner, vorzugsweise der autorisierende Telekommunikationsnetzbetreiber, den Ladevorgang durch ein entsprechendes kryptografiertes finales Start-Signal an alle Vertragspartner. Hierdurch kommt der Vertrag zustande. Dieses Signal kann von den Vertragspartnern aufgezeichnet werden. Es ist daher sinnvoll, es unabhängig von der Verschlüsselung mit einem elektronischen Wasserzeichen zu schützen. Der Mobilteilbesitzer erhält zumindest eine Quittungsmeldung über besagte verschlüsselte Kommunikationskette.

Der Steuerrechner im Auto 14 verifiziert den Freischaltcode. Welcher Code ein Freischalten des Ladevorgangs ermöglicht, muss der Steuerrechner 14 des Autos hierfür an den Zentralrechner des autorisierenden Vertragspartners - typischerweise des Telekommunikationsanbieters 25 - über den geschützten Kommunikationskanal - nicht lesbar für den Mobilteilbesitzer - zu Beginn des Prozesses übermittelt haben.

Es ist jedoch wichtig sicherzustellen, dass der autorisierende Vertragspartner - hier der Zentralrechner des Telekommunikationsbetreibers 25 -, tatsächlich der autorisierende Vertragspartner, d.h. der Zentralrechner des Telekommunikationsbetreibers, ist. Anderenfalls könnte dem Auto eine korrekte Lieferkette vorgegaukelt werden und Strom illegal abgezapft werden. Zu diesem Zweck erhält der Steuerrechner 14 im Auto vom autorisierenden Vertragspartner - typischerweise vom Zentralrechner des Telekommunikationsnetzbetreibers 25 - einen Autorisierungsschlüssel, den der Steuerrechner 14 im Auto bei einer zentralen Autorisierungsstelle 32 - typischerweise beim Automobilhersteller - über einen geschützten, verschlüsselten Kommunikationskanal verifiziert. Dieser sendet an den Steuerrechner 14 im Auto das Freischaltsignal, das dieser, wie bereits oben erwähnt, an den Telekommunikationsnetzbetreiber dann weitergibt.

Sobald der Zentralrechner des Telekommunikationsnetzbetreibers 25 diesen Freischaltcode an den Steuerrechner im Auto 14 mit einem entsprechenden Ladebefehl übermittelt, schaltet die Ladeelektronik 14,2 den Ladevorgang frei. Die Messeinrichtung 6,5,13 erfasst die übertragene Energiemenge und übermittelt diese über besagten Kommunikationskanal an den autorisierenden Vertragspartner - vorzugsweise den Zentralrechner des Telekommunikationsanbieters 25.

Dieser übermittelt die Energiemenge an den Zentralrechner 20 des Stromanbieters, der daraufhin die Rechnung erstellt. Typischerweise wird diese Rechnung an den Telekommunikationsanbieter geschickt, der diese wiederum an den Mobilteilbesitzer weitergibt. Der Zentralrechner des Stromnetzbetreibers 19 erhält diese Informationen und zieht die gelieferte Strommenge von der Strommenge bei der nächsten Stromrechnung des Entnahmestellenbesitzers 26 ab. Gegebenenfalls kann der Entnahmestellenbetreiber eine Vergütung für die Dienstleistung gutgeschrieben bekommen.

Hierdurch ist es also möglich, beliebige Netzanschlüsse für die Ladung beliebiger Autos zu nutzen.

Selbstverständlich ist es möglich, andere Zahlungsmittel zur Abwicklung des Vertrages zu verwenden. In diesem Falle kommt ggf. ein weiterer Vertragspartner, ein Kreditinstitut hinzu. Auch ist es denkbar, dass einzelne Parteien tatsächlich aus mehreren Entitäten bestehen (z.B. mehrere Stromnetzbetreiber, die zur Durchleitung der Energie erforderlich sind etc.). Auch ist es denkbar, dass einzelne Vertragspartner mehrere Rollen gleichzeitig wahrnehmen. (z.B. Stromlieferant und Telekommunikationsunternehmen etc.).

Durch dieses Verfahren verfügen sämtliche Beteiligten jederzeit über die Informationen über die aufgenommene Energiemenge. Im Falle der Rückspeisung von Energie durch das Auto in das Stromnetz ist die Energiebilanz negativ. Statt einer Belastung erfolgt dann eine Gutschrift.

Es ist nun besonders vorteilhaft, wenn in einer zweiten Verkörperung der Erfindung auch die Entnahmestelle mit der Möglichkeit versehen ist, die abgegebene Energiemenge während des Ladevorgangs zu messen 9,10,17 und diese Information in die Informationskette einzuspeisen. Hierdurch können Fehlmengen erfasst werden. Diese können entweder auf eine Fehlfunktion der Messinstrumente oder einen Defekt der elektrischen Verbindung durch z. B. Leckströmen hindeuten. Hierzu werden die gemeldeten Lieferdaten von den Vertragspartnern in der Lieferkette verglichen. Übersteigt für einen vorbestimmten Zeitraum die Abweichung der beiden Messwerte einen noch zulässigen Maximalwert, so stellt dies typischerweise einen Fehlerfall dar. In diesem Fall kann, falls gewünscht, die Stromverbindung und damit der Ladevorgang unterbrochen werden, was typischerweise durch einen Steuerbefehl eines autorisierten Vertragspartners an den Steuerrechner 14 des Autos oder eine optionale, äquivalente Einheit 11 in der Entnahmestelle erfolgt. Die Unterbrechung kann somit sowohl im Auto als auch an der Entnahmestelle durch entsprechende Einrichtungen 11,2 erfolgen.

Im Falle einer solchen Unterbrechung sendet der autorisierte Vertragspartner eine entsprechende Botschaft über den verschlüsselten Informationskanal an die Teilnehmer.

Sofern gleichzeitig eine Temperaturüberwachung der elektrischen Verbindung stattfindet, kann festgestellt werden, ob die Ursache ein sicherheitsrelevanter Kriechstrom war. Dieser kann ggf. zu einem Brand führen.

Diese doppelte Messung hat den weiteren Vorteil, dass sie ermöglicht, beide Messeinrichtungen auf ihre Funktionstüchtigkeit zu kontrollieren. Sofern die Abweichungen an einer Entnahmestelle wiederholt zu groß waren, ist es wahrscheinlich, dass die Messeinrichtung defekt ist oder zumindest neu kalibriert werden muss. Gleiches gilt für das Auto. Hierfür sind beide Einrichtungen mit je einer Kalibriereinrichtung 13,17 versehen. Diese verfügen jeweils über einen nicht manipulierbaren Speicherbereich für die Kalibrierdaten. Dieser Speicherbereich ist nur für spezielle Wartungskräfte zugreifbar.

Für den Abgleich des Messinstruments 6,5,13 kann die beschriebene Infrastruktur genutzt werden, um an einer speziellen Entnahmestelle eines speziellen autorisierten Entnahmestellenbesitzers - z.B. TÜV etc- gegebenen Falls mit zusätzlicher Kalibrierfreigabe des Fahrers definierte Strommengen zu laden und die ermittelten Werte zum Abgleich des Messsystems zu nutzen. Die notwendige Häufigkeit des Abgleichs kann zum einen werksseitig durch das Fahrzeug vorgegeben aber auch von Vertragspartnern gefordert werden.

Ähnlich kann der Abgleich von Entnahmestellen mit Strommess- und Kontrolleinrichtung durch Nutzung eines nun mobilen Referenzsystems erfolgen. In diesem Fall werden die Messinstrumente 9,10,17 der Entnahmestelle (Stromtankstelle) abgeglichen.

Eine wichtige wünschenswerte Eigenschaft der für die Messung des elektrischen Stromes notwendigen Messeinrichtungen 6,10) ist, dass die Messung des Stromes vorzugsweise ohne einen Shunt-Widerstand erfolgen kann, wenn beispielsweise das Magnetfeld des Ladestromes für die Messung ausgewertet wird. Die Strommessung selber sollte also sinnvollerweise ohne relevanten Energieverlust durchgeführt werden. Insbesondere geeignet hierfür sind Messgeräte, die das Magnetfeld auswerten, während die klassischen (shuntbasierten) Systeme einen Spannungsabfall und damit einen Energieverbrauch durch die Messung selber voraussetzen. Zudem eignet sich das System ebenfalls bei "steckerlosem" (induktivem) Laden.

Eine Überbrückung des Ladesteuergerätes und/ oder ein Austausch des Energiespeichers im Auto wird durch Schutzmaßnahmen verhindert oder erkannt. Andere Manipulationen an den Messeinrichtungen 6,5,13, der Ladesteuerrechner 14, die Ladesteuerung 2 und der Datenkanal vom Steuerrechner 14 sollten durch geeignete Maßnahmen wie Vergießen, Verschlüsseln, Verriegeln des Zugriffs etc. verhindert werden.

Des Weiteren sollte die Strommesseinrichtung 6 vor Störfeldern beispielsweise durch eine magnetische Schirmung EMV geschützt sein.

Da die Messeinrichtung 6,5,13, der Ladesteuerrechner 14, die Ladesteuerung 2 und der Datenkanal vom Steuerrechner 14 aus dem Auto heraus als sicher angenommen werden können, eignen Sie sich auch zur Erfassung steuerzahlungsrechtlich relevanter Größen, falls eine Besteuerung der für die Elektromobilität benötigten Energie erfolgt.

Schließlich soll noch erwähnt werden, dass ein großer Teil der Kommunikation physikalisch über nicht weiter definierbare öffentliche Kommunikationsnetze 31 mit verschlüsselten logischen Kanälen abgewickelt wird.

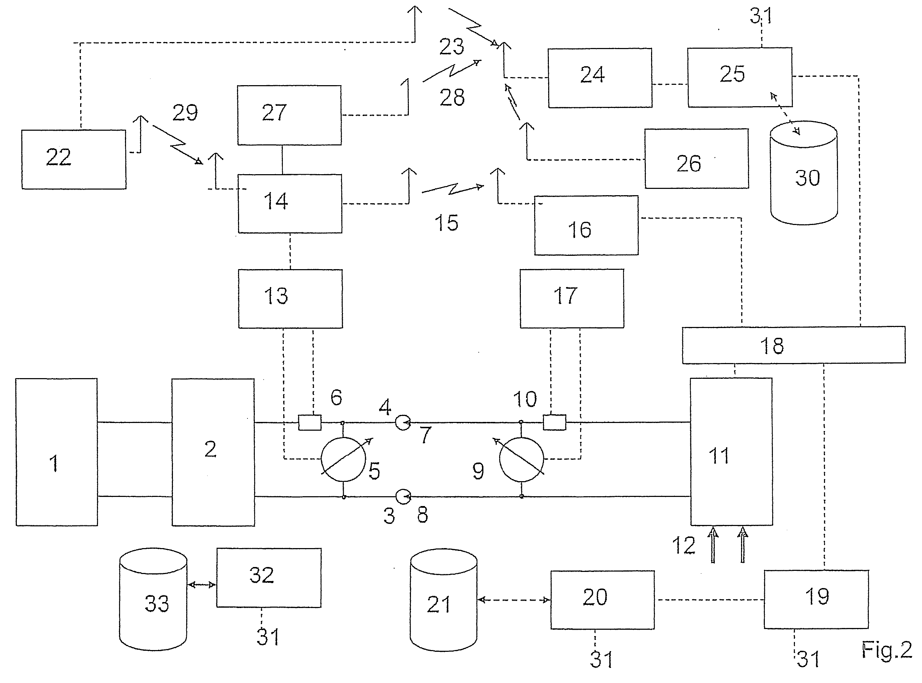

Das erfindungsgemäße Verfahren wird nachfolgend nochmals zusammengefasst und unter Bezugnahme auf die Fign. 1 und 2 erläutert.

Ein Energie-Speicher 1, vorzugsweise in einem Fahrzeug, ist mit einer Ladesteuereinheit 2 verbunden, die während des Ladevorgangs über die Leitungen 4,3 geladen wird. Während des Ladevorgangs wird die über die oder den Stecker 4,3 eingespeiste elektrische Leistung über ein spannungsmessgerät 5 und einen shuntlosen Stromsensor 6 überwacht. Der Übergabepunkt 4,3 kann auch kontaktlos (induktives Laden) ausgeführt sein.

Von besonderer Wichtigkeit ist dabei, dass der Stromsensor nicht den Spannungsabfall an einem Shunt-Widerstand misst, sondern diesen indirekt und damit ohne zusätzliche Verlustleistung, beispielsweise über das magnetische Streufeld des Leiters erfasst. Solche Sensoren können z.B. Hall-Sensoren und/oder AMR-Sensoren sein.

Die beiden Sensoren 5,6 übermitteln die erfassten Werten an eine Auswert- und Kalibriereinheit 13, die typischerweise die erfassten Werte mit einer zuvor in einem Kalibriervorgang off-line bestimmten Kalibrierfunktion korrigiert. Die so erfassten Leistungswerte können dann über einen Rechner mit Schnittstelle 14 vom Fahrzeug - beispielsweise über eine Funkstrecke 15 oder eine Kabelverbindung und einen Empfänger in der Stromtankstelle 16 an einen Rechner 18 übermittelt werden. In der Stromtankstelle befindet sich eine entsprechende Vorrichtung zur Erfassung der abgegebenen Energiemenge bestehend aus den Sensoren 9,10 und der zugehörigen Kalibriereinheit 17. Das Rechnersystem 18 der Stromtankstelle steuert dabei über eine Steuereinheit 11 den Ladevorgang von Seiten der Stromtankstelle. Gleichzeitig tauscht der Rechner der Stromtankstelle 18 Daten mit dem Rechnernetzwerk des Stromanbieters 20 über die Schnittstelle 19 aus, der die Daten in einer Datenbasis 21 ablegt bzw. aus dieser Datenbasis Verifikationsdaten etc. entnimmt.

Für die Sicherstellung einer korrekten Abrechnung ist es notwendig, dass die Werte, die im Auto durch das dortige System 5,6,13 gemessen werden, mit den Werten der Stromtankstelle 9,10,17 übereinstimmen.

Hierzu gleicht das Rechnersystem der Stromtankstelle 18 die durch die Stromtankstelle 9,10,17 gemessenen Werte mit den Werten des Autos aus dessen Messsystem 5,6,13 permanent ab.

Zusätzlich können sowohl Fahrzeug als auch Stromtankstelle die entsprechenden Messwerte über abgesicherte Datenkanäle an das Rechnersystem des Stromanbieters 20,21 senden, wobei das Fahrzeug gegebenenfalls die Infrastrukturanbindung der Tankstelle nutzen kann. Diese vergleicht ebenfalls permanent die von den beiden Parteien gemessenen Werte miteinander.

Der Tankvorgang läuft so ab, dass zuerst die elektrische Verbindung zwischen Auto und Stromtankstelle hergestellt wird, ohne dass bereits elektrische Energie zur Verfügung gestellt wird. Sodann wird die Datenverbindung zwischen Stromtankstelle und Auto hergestellt. Diese beiden Schritte können auch in umgekehrter Reihenfolge ablaufen.

Zunächst identifiziert sich das Auto bei der Stromtankstelle. Die Identifizierung kann auch durch kryptographische Protokolle unterstützt werden. Die Authentizität der beteiligten Partner (mindestens Fahrzeug und Tankstelle, aber auch evtl. der Stromlieferant), sowie die sichere Kommunikation zu Abrechnungszwecken, wird durch kryptographische Primitive abgesichert. Gegebenenfalls tauschen beide technische Konformitätsdaten aus, um einen technisch erfolgreichen Ladevorgang sicherzustellen. Fällt auf beiden Seiten die Prüfung positiv aus, wird der Vorgang fortgesetzt. Andernfalls wird in dem jeweiligen Gerät eine Fehlermeldung erzeugt und an das andere Gerät übermittelt. Der Vorgang wird auf diese Weise abgebrochen, so wie bei anderen im Folgenden beschriebenen Abbruchbedingungen.

Sofern Auto und Stromtankstelle erfolgreich die technische Konformität festgestellt haben, erfolgt die Feststellung der vertraglichen Konformität durch Austausch von Vertragsdaten oder die Festlegung der Zahlweise sowie der zugehörigen Authentifizierung.

Hierbei ist es denkbar, dass nur Autos mit Verträgen bestimmter Stromanbieter an der betreffenden Stromtankstelle zugelassen sind. Ebenso möglich ist es, bar oder mit bargeldlosen Zahlungsmitteln die benötigte Strommenge im Vorhinein oder nachträglich zu bezahlen.

Mehr noch, der Vertrag kann auch fahrerabhängig gestaltet werden, indem z.B. eine SIM-Karte 22 ausgewertet wird, die beispielsweise drahtgebunden oder drahtlos mit dem Rechner 14 verbunden ist.

In diesem Fall ist es beispielsweise denkbar, dass es sich bei dem Stromanbieter um einen Mobilfunkbetreiber handelt, der die SIM-Karte eines mit dem Fahrzeug verbundenen Mobiltelefons für die Identifikation und/oder für die Zahlung auswertet.

Treten nun Abgleichungen zwischen den beiden gemessenen Werten außerhalb eines vorausbestimmten erlaubten Messfehlers über einen gewissen Zeitraum hinweg auf, so kann die feststellende Partei den Tankvorgang mit einer Fehlermeldung abbrechen und die beiden anderen Parteien informieren.

Die drei beteiligten Parteien sind also mindestens ein Auto, die Stromtankstelle und der Stromanbieter.

Durch das Verfahren verfügen alle drei jederzeit über die vom Auto aufgenommene und von der Stromtankstelle abgegebene Energiemenge.

Der Stromanbieter entzieht, sofern er die Diskrepanz feststellt, hierbei der Stromtankstelle für diesen Tankvorgang die Erlaubnis zur Inrechnungstellung von Strommengen.

Umgekehrt bricht das Auto den Tankvorgang bei Abweichungen umgehend ab und speichert den Vorgang in einem für den Nutzer nicht manipulierbaren Speicherbereich des Rechnersystems 14.

Dieser Speicherbereich ist für Wartungskräfte ausschließlich lesbar.

Stellt die Stromtankstelle eine Diskrepanz fest, so verfährt sie in gleicher Weise.

Für den Abgleich des Messgeräts im Fahrzeug kann die beschriebene Infrastruktur genutzt werden, indem besonders autorisierte Partner (z.B. TüV), ggf. nach Freigabe durch den Fahrer, eine definierte Strommenge liefern und das bereits beschriebene Messsystem im Fahrzeug dann die genutzten Abgleichwerte darauf anpasst. Die notwendige Häufigkeit dieses Abgleichvorganges kann das Fahrzeug anhand der Anzahl der oben beschriebenen Abbruchvorgänge selber bestimmen.

Ähnlich kann der Abgleich der Stromtankstellen durch Nutzung eines nun mobilen Referenzsystems erfolgen. Hier kann ebenfalls eine definierte Strommenge geliefert werden und die Stromtankstelle passt ihre Abgleichwerte an, so dass die Messungen mit den vom Referenzsystem vorgegebenen Strommengen übereinstimmen. Auch hier kann wieder die notwendige Häufigkeit des Abgleichvorgangs aus den vorgekommenen Abbruchvorgängen bestimmt werden.

Zur Vermeidung von Missbrauch erfolgt die Kommunikation der Partner jeweils sicher verschlüsselt und autorisiert. Mindestens für die beschriebenen Abgleichschritte kann eine zusätzliche Freigabe zur Durchführung des Abgleichs über einen getrennten Kanal erfolgen.

Die Erfindung bietet ein Maximum an Flexibilität, was die Auswahl der am zuvor beschriebenen Prozess beteiligten (Vertrags-)Partner bzw. Institutionen und die Vertragsbedingungen (insbesondere Stromtarife) betrifft. So kann z.B. ein Mietwagenfahrer an einer beliebigen Stromtankstelle Strom von "seinem" Stromanbieter beziehen. Die Stromabrechnung erfolgt nach der Erfindung unabhängig z.B. vom Fahrzeug, von der Stromtankstelle und vom Stromanbieter.

Einzelne Aspekte der Erfindung sind nachfolgend nach Merkmalsgruppen nochmals zusammengefasst:
1. Verfahren zur Erfassung eines von einer ersten Einheit zu einer zweiten Einheit transferierbaren, mengenmäßig bestimmbaren Mediums, mit den folgenden Schritten, wobei die nachfolgende Reihenfolge der Schritte nicht zwingend ist,
   - Auswählen eines Lieferanten des zu transferierenden Mediums, insbesondere an der ersten Einheit (durch z.B. ein festes Endgerät) oder entfernt davon (durch z.B. ein mobiles Endgerät),
   - Identifizieren einer für die noch zu transferierende oder für die bereits transferierte Menge an Medium zahlenden Entität (natürliche oder juristische Person) gegenüber dem ausgewählten Lieferanten,
   - insbesondere kontinuierliches Erfassen der von der ersten Einheit an die zweite Einheit transferierten Menge an Medium und
   - Abwicklung eines Bezahlvorgangs (z.B. auf Rechnung oder ähnlich wie bei Bezahlungen durch eine Kreditkarte, Debitcard oder andere Prepaid-Card).
2. Verfahren nach Ziffer 1, wobei die erste Einheit ein Medium-Erzeuger und/oder ein Medium-Lieferant und/oder ein Medium-Übertrager ist oder mit mindestens einem dieser in Verbindung steht bzw. zu mindestens einem dieser gehört und dass die zweite Einheit eine die Menge an Medium verarbeitende Entität (z.B. natürlich oder juristische Person) ist oder dass die zweite Einheit ein Medium-Erzeuger und/oder ein Medium-Lieferant und/oder ein Medium-Übertrager ist oder mit mindestens einem dieser in Verbindung steht bzw. zu mindestens einem dieser gehört und dass die erste Einheit eine die Menge an Medium verarbeitende oder eine gespeicherte Menge an Medium zur Verfügung stellende Entität (z.B. natürlich oder juristische Person) ist.
3. Verfahren nach Ziffer 1 oder 2, wobei eine verschlüsselte Verbindung zu einer Autorisierungsstelle (z.B. beim Lieferanten, Erzeuger oder Übertrager oder bei einem Trustcenter) hergestellt wird, die eine personalisierte Identifikation und eine Autorisierung durchführt.
4. Verfahren nach Ziffer 3, wobei die Autorisierung von einer zweiten Autorisierungsstelle überprüft wird.
5. Verfahren nach Ziffer 4, wobei ein Datenaustausch mit dieser zweiten Autorisierungsstelle in der Art durchgeführt wird, dass diese einen Freischaltcode generiert, der die erste Einheit zur Aufnahme oder Abgabe von elektrischer Energie über eine drahtgebundene oder drahtlose Energieschnittstelle verlassen kann, und über die zweite Autorisierungsstelle die Autorisierung der ersten Autorisierungsstelle überprüfen kann.
6. Verfahren nach Ziffer 5, wobei der Freischaltcode Eigenschaften einer Zufallszahl hat und für jeden Freischaltvorgang unterschiedlich ist.
7. Verfahren nach einem der vorhergehenden Ziffern, wobei die erfassten Mengen an geliefertem und empfangenem Medium erfasst und an eine dritte Stelle, insbesondere an eine staatliche Stelle, insbesondere die Finanzbehörden weitergeleitet wird.
8. Verfahren nach einer der Ziffern 1 bis 7, gekennzeichnet durch die weiteren Schritte
   - kontinuierliches Erfassen der Menge an Medium, die die zweite Einheit von der ersten Einheit empfangen hat,
   - kontinuierliches Vergleichen beider erfasster Mengen und
   - Bewerten des aktuellen Ergebnisses des Vergleichs.
9. Verfahren nach Ziffer 8, wobei der Transfer des Mediums von der ersten Einheit auf die zweite Einheit abgebrochen wird, sobald während des Transfervorgangs sich die erfassten Mengen um mehr als ein vorgebbarer Differenzwert voneinander unterscheiden.
10. Verfahren nach Ziffer 9, wobei vor dem Abbruch des Transfervorgangs eine Warnung o.dgl. Information betreffend den beabsichtigten Abbruch des Transfers an die zweite Einheit bzw. eine für die zweite Einheit verantwortliche Entität abgesetzt wird.
11. Verfahren nach einer der Ziffern 8 bis 10, wobei ein Transfervorgang unterbrochen wird, wenn sich die insbesondere über einen vorgebbaren Zeitraum erfassten akkumulierten Mengen an Medium, das die zweite Einheit während mehrerer insbesondere unter Beteiligung verschiedener erster Einheiten erfolgter Transfervorgänge empfangen hat, um mehr als ein vorgebbarer Differenzwert von der insbesondere innerhalb des vorgegebenen Zeitraums von insbesondere mehreren ersten Einheiten an die zweite Einheit gelieferten akkumulierten Mengen an Medium unterscheidet.
12. Verfahren nach einer der Ziffern 1 bis 11, wobei das Medium ein Energieträger wie z.B. elektrischer Strom, Gas oder Wasser ist.
13. Verfahren nach einer der Ziffern 1 bis 12, wobei das Medium elektrischer Strom ist, dass die erste Einheit stationär und die zweite Einheit mobil ist und dass die zweite Einheit ein elektrisch aufladbares Fahrzeug oder eine von einer Person mitführbare, elektrisch zu betreibende und insbesondere auch elektrisch aufladbare Gerätschaft wie beispielsweise ein Computer, ein Telefon oder ein anderes mobiles Endgerät ist.
14. Verfahren nach einer der Ziffern 1 bis 13, wobei sowohl die erste Einheit als auch die zweite Einheit jeweils eine insbesondere regelmäßig gewartete und überprüfte bzw. abgeglichene, im Extremfall geeichte Mess- und Erfassungsvorrichtung für die gelieferte bzw. empfangene Menge an Medium aufweist.
15. Verfahren nach einer der vorhergehenden Ziffern, wobei durch den kontinuierlichen Vergleich das Vorliegen von Fehlerbedingungen ermittelt wird.
16. Verfahren nach einer der vorhergehenden Ziffern, wobei das Eintreten von Fehlerbedingungen zur Steuerung, insbesondere aber auch zum Transferabbruch, und/oder zu Wartungszwecken genutzt werden können.

**Liste der Bezeichnungen**

| **Nr.** | **Bezeichnung** |
|---|---|
| 1 | Energiespeicher im Auto |
| 2 | Ladeelektronik im Auto |
| 3 | Steckverbindung erster Pol |
| 4 | Steckverbindung zweiter Pol |
| 5 | Spannungsmessinstrument im Auto |
| 6 | Strommessinstrument im Auto (typischerweise Shunt los) |
| 7 | Stromzuleitung erster Pol (zwischen Auto und Lieferseite) |
| 8 | Stromzuleitung zweiter Pol (zwischen Auto und Lieferseite) |
| 9 | Spannungsmessinstrument auf der Lieferseite |
| 10 | Strommessinstrument (Lieferseite) der Entnahmestelle (typischerweise Shunt los) |
| 11 | Smart Meter oder einfacher Stromzähler der Entnahmestelle |
| 12 | Netzanschluss / Hausanschluss etc. der Entnahmestelle |
| 13 | Messelektronik im Auto (Auswerte- und Kalibriereinheit) |
| 14 | Steuerrechner im Auto. Dieser verfügt über mindestens eine Schnittstelle. |
| 15 | Nachrichtenstrecke zwischen Steuerrechner (14) im Fahrzeug und einer Empfangseinheit (16) (typischerweise Funk- oder Draht gebunden) Die Empfangseinheit stellt eine Verbindung zu einem Rechner in der Lieferkette (z.B. 18) her. Die Empfangseinheit kann mit (24) oder (22) beispielsweise identisch sein. |
| 16 | Rechner mit Datenverbindung zum Telekommunikationsanbieter (25) oder Stromnetzbetreiber oder Stromlieferanten (18) |
| 17 | Messelektronik an der Entnahmestelle (Auswerte- und Kalibriereinheit) |
| 18 | Rechnersystem des Stromnetzbetreibers, typischerweise in einer Stromtankstelle oder in einem Smart-Meter in der Entnahmestelle. |
| 19 | Zentralrechner des Stromnetzbetreibers |
| 20 | Zentralrechner des Stromanbieters |
| 21 | Datenbasis mit Verifikationsdaten zur Identifikation des Stromkunden und / oder des Besitzers der Entnahmestelle |
| 22 | Mobilgerät mit SIM Karte, Anzeige und Eingabemöglichkeit (Smart-Phone) |
| 23 | Datenverbindung Mobilteil (22) Basisstation (24) |
| 24 | Basisstation |
| 25 | Zentralrechner des Telekommunikationsanbieters |
| 26 | Mobilteil des Besitzers der Entnahmestelle |
| 27 | (Funk-) Schnittstelle des Autos |
| 28 | Datenverbindung des Autos |
| 29 | Datenverbindung zwischen Mobilteil (22) und Auto (typischerweise als Funkverbindung, z.B. Bluetooth) |
| 30 | Datenbasis mit Verifikationsdaten zur Identifikation der Mobilfunkteilnehmer |
| 31 | Verbindungen zum allgemeinen Telekommunikationsnetz |
| 32 | Rechner des Automobilherstellers oder Herstellers der Ladeeinrichtung |
| 33 | Datenbasis |

## Patentansprüche

1. Verfahren zur Erfassung eines von einer ersten Einheit zu einer zweiten Einheit transferierbaren, mengenmäßig bestimmbaren Mediums, nämlich elektrischer Strom, mit den folgenden Schritten, wobei die nachfolgende Reihenfolge der Schritte nicht zwingend ist,
- Auswählen eines Lieferanten des zu transferierenden Mediums, ,
- Identifizieren einer für die noch zu transferierende oder für die bereits transferierte Menge an Medium zahlenden Entität (natürliche oder juristische Person) gegenüber dem ausgewählten Lieferanten,
- insbesondere kontinuierliches Erfassen der von der ersten Einheit an die zweite Einheit transferierten Menge an Medium,
- kontinuierliches Erfassen der Menge an Medium, die die zweite Einheit von der ersten Einheit empfangen hat,
- kontinuierliches Vergleichen beider erfasster Mengen,
- Bewerten des aktuellen Ergebnisses des Vergleichs und
- Abwicklung eines Bezahlvorgangs.

2. Verfahren nach Anspruch 1, **dadurch gekennzeichnet, dass** der Transfer des Mediums von der ersten Einheit auf die zweite Einheit abgebrochen wird, sobald während des Transfervorgangs sich die erfassten Mengen um mehr als ein vorgebbarer Differenzwert voneinander unterscheiden.

3. Verfahren nach Anspruch 2, **dadurch gekennzeichnet, dass** vor dem Abbruch des Transfervorgangs eine Warnung o.dgl. Information betreffend den beabsichtigten Abbruch des Transfers an die zweite Einheit bzw. eine für die zweite Einheit verantwortliche Entität abgesetzt wird.

4. Verfahren nach einem der Ansprüche 1 bis 3, **dadurch gekennzeichnet, dass** ein Transfervorgang unterbrochen wird, wenn sich die insbesondere über einen vorgebbaren Zeitraum erfassten akkumulierten Mengen an Medium, das die zweite Einheit während mehrerer insbesondere unter Beteiligung verschiedener erster Einheiten erfolgter Transfervorgänge empfangen hat, um mehr als ein vorgebbarer Differenzwert von der insbesondere innerhalb des vorgegebenen Zeitraums von insbesondere mehreren ersten Einheiten an die zweite Einheit gelieferten akkumulierten Mengen an Medium unterscheidet.

5. Verfahren nach einem der Ansprüche 1 bis 4, **dadurch gekennzeichnet, dass** sowohl die erste Einheit als auch die zweite Einheit jeweils eine insbesondere regelmäßig gewartete und überprüfte bzw. abgeglichene, im Extremfall geeichte Mess- und Erfassungsvorrichtung für die gelieferte bzw. empfangene Menge an Medium aufweist.

6. Verfahren nach einem der vorhergehenden Ansprüche, **dadurch gekennzeichnet, dass** durch den kontinuierlichen Vergleich das Vorliegen von Fehlerbedingungen ermittelt wird.

7. Verfahren nach einem der vorhergehenden Ansprüche, **dadurch gekennzeichnet, dass** das Eintreten von Fehlerbedingungen zur Steuerung, insbesondere aber auch zum Transferabbruch, und/oder zu Wartungszwecken genutzt werden können.

8. Verfahren nach einem der Ansprüche 1 bis 7, **dadurch gekennzeichnet, dass** das Auswählen des Lieferanten des zu transferierenden Mediums an der ersten Einheit oder entfernt davon erfolgt.

9. Verfahren nach Anspruch 8, **dadurch gekennzeichnet, dass** das Auswählen des Lieferanten des zu transferierenden Mediums an der ersten Einheit durch ein festes Endgerät oder entfernt davon durch ein mobiles Endgerät erfolgt.

10. Verfahren nach einem der Ansprüche 1 bis 9, **dadurch gekennzeichnet, dass** der Bezahlvorgang auf Rechnung oder wie bei einer Kreditkarte, Debitcard oder einer anderen Prepaidcard erfolgt.

11. Verfahren nach einem der Ansprüche 1 bis 10, **dadurch gekennzeichnet, dass** die für die noch zu transferierende oder für die bereits transferierte Menge an Medium zahlenden Entität eine natürliche oder juristische Person ist.

12. Verfahren nach einem der Ansprüche 1 bis 11, **dadurch gekennzeichnet, dass** die erste Einheit ein Medium-Erzeuger und/oder ein Medium-Lieferant und/oder ein Medium-Übertrager ist oder mit mindestens einem dieser in Verbindung steht bzw. zu mindestens einem dieser gehört und dass die zweite Einheit eine die Menge an Medium verarbeitende Entität ist.

13. Verfahren nach Anspruch 12, **dadurch gekennzeichnet, dass** die die Menge an Medium verarbeitende Entität eine natürliche oder juristische Person ist.

14. Verfahren nach einem der Ansprüche 1 bis 13, **dadurch gekennzeichnet, dass** die zweite Einheit ein Medium-Erzeuger und/oder ein Medium-Lieferant und/oder ein Medium-Übertrager ist oder mit mindestens einem dieser in Verbindung steht bzw. zu mindestens einem dieser gehört und dass die erste Einheit eine die Menge an Medium verarbeitende oder eine gespeicherte Menge an Medium zur Verfügung stellende Entität ist.

15. Verfahren nach Anspruch 14, **dadurch gekennzeichnet, dass** die die Menge an Medium verarbeitende oder die gespeicherte Menge an Medium zur Verfügung stellende Entität eine natürliche oder juristische Person ist.

16. Verfahren nach einem der Ansprüche 1 bis 15, **dadurch gekennzeichnet, dass** die erste Einheit stationär und die zweite Einheit mobil ist und dass die zweite Einheit ein elektrisch aufladbares Fahrzeug oder eine von einer Person mitführbare, elektrisch zu betreibende und insbesondere auch elektrisch aufladbare Gerätschaft wie beispielsweise ein Computer, ein Telefon oder ein anderes mobiles Endgerät ist.
